# EUROPÄISCHE PATENTSCHRIFT

(11) **EP 0 753 917 B1**
(45) Veröffentlichungstag und Bekanntmachung des Hinweises auf die Patenterteilung: **23.12.1998**
(21) Anmeldenummer: 96101572.4
(22) Anmeldetag: 03.02.1996
(51) Int. Cl.: H02G 3/06

(54) **Elektroinstallationskanal**
Electrical installation channel
Canalisation pour installation électrique

(30) Priorität: 04.07.1995 DE 29510836 U
(43) Veröffentlichungstag der Anmeldung: 15.01.1997
(73) Patentinhaber: Albert Ackermann GmbH & Co. KG, 51643 Gummersbach (DE)
(72) Erfinder: Fastenroth, Kurt Helmut, D-51647 Gummersbach (DE)
(74) Vertreter: Wilhelm & Dauster Patentanwälte European Patent Attorneys

(56) Entgegenhaltungen:
- DE-A- 3 111 686
- FR-A- 2 472 293
- US-A- 4 525 971

## Beschreibung

Die Erfindung betrifft einen Elektroinstallationskanal, insbesondere einen Wandkanal, der aus U- bzw. C-förmigen Profilstücken aus Leichtmetall, insbesondere aus Aluminium besteht, die zur Bildung von Umlenkecken auf Gehrung geschnitten und mit benachbarten Profilstücken stirnseitig aneinandergesetzt miteinander verbunden sind, wobei jedes Profilstück mit einer Formtasche ausgestaltet ist, in die ein Schenkel eines unter dem Winkel der Umlenkung abgeknickten Verbindungswinkels formschlüssig einsetzbar ist.

Wandkanäle zur Verlegung von Installationsleitungen sind bekannt (DE-OS 31 11 686). Bei solchen Wandinstallationskanälen ist die Herstellung von ästhetisch wirkenden und gut aussehenden Formstücken, wie Inneneckwinkel, Außeneckwinkel und Flachwinkel mit einem erhöhten Aufwand verbunden, weil die Verbindungsstelle von außen so wenig als möglich betont werden soll, um den Gesamteindruck des montierten Kanals nicht zu stören. Die Herstellung der Eckverbindungen erfordert daher große Sorgfalt und eine entsprechende machinelle Ausrüstung, die auf einer Baustelle in der Regel nicht vorhanden ist. Formstücke dieser Art werden daher vorgefertigt. Sie erfordern eine relativ aufwendige Lagerhaltung.

Dazu kommt, daß die mechanisch stabile Verbindung der auf Gehrung gesägten Profilstücke Schwierigkeiten bereitet. Niet- oder Schraubverbindungen scheiden aus dem vorher genannten Grund, da sie die Verbindungsstelle zu sehr betonen, von vorneherein aus. Eine Klebeverbindung, die nur am Profilquerschnitt erfolgen kann, erbringt unter Umständen keine ausreichende Festigkeit mit sich, und das Einsetzen von verklebten Winkelblechen erfordert die Verwendung von Hilfsvorrichtungen, um die Teile während der Trocknungsphase des Klebers zueinander zu fixieren.

Ein Verlöten hat als Verbindungstechnologie kaum Erfolg, und ein Schweißvorgang ist wegen der hervorragenden Wärmeleitfähigkeit von Aluminium und der Oxidationsneigung sowie der meistens auch noch aufgebrachten Eloxalbeschichtung nur sehr grob zu verwirklichen und führt auch zu thermisch bedingtem Verzug der Teile.

Es ist daher auch schon ein Elektroinstallationskanal der eingangs genannten Art bekanntgeworden (DE-U1 79 36 230), bei dem man die Profilstücke mit Einschiebenuten in der Art von Formtaschen ausgebildet hat, in die ein Schenkel eines Verbindungswinkels eingeschoben ist, wobei diese in die Einschiebenuten eingefügten Schenkel auch mit Vorsprüngen oder Wellungen versehen sein können, die sich an den Wandungen der Nuten verklemmen. Solche Bauarten erlauben zwar das Zusammensetzen von Profilstücken, ohne die eingangs erwähnten Nachteile der Verwendung von besonderen Verbindungselementen oder von Lötstellen. Die gewählte Art der Verbindung setzt aber das Einpressen der Schenkel der Verbindungsstücke mit relativ hoher Kraft voraus, insbesondere wenn - wie vorher angedeutet - Vorsprünge oder Wellungen an den Schenkeln vorgesehen sind. Dies kann die Montage erschweren.

Der vorliegenden Erfindung liegt daher die Aufgabe zugrunde, eine Möglichkeit zur formfesten und dauerhaften Verbindung von Profilstücken der eingangs genannten Art zu schaffen, die einfach, insbesondere auch auf der Baustelle, durchzuführen ist.

Zur Lösung dieser Aufgabe wird ein Elektroinstallationskanal, insbesondere ein Wandkanal der eingangs genannten Art vorgesehen, bei dem der Verbindungswinkel an seinen Schenkeln mit nach einer Seite abstehenden Sperrzähnen versehen ist, die sich formschlüssig in mindestens einer Wandung der Formtaschen verkrallen. Durch diese Ausgestaltung erfolgt das Zusammensetzen der Profilstücke an ihren auf Gehrung gesägten Stirnseiten rein mechanisch und ausschließlich durch Aufschieben auf die Schenkel des Verbindungswinkels, der mit dazu dient, die Teile paßgenau aufeinander auszurichten und dann zusammenzuhalten, so daß die gewünschte feste und formschöne Aneinanderfügung erreicht wird. Die Sperrzähne erlauben dabei zwar das Einschieben bzw. Einpressen der Verbindungsschenkel mit relativ niedrigen Kräften, nicht aber das umgekehrte Wiederherausziehen. Eine dauerhafte und formfeste Verbindung ist geschaffen.

In Weiterbildung der Erfindung können die Sperrzähne in einfacher Weise durch L-förmige Einschnitte an den Längsseiten der Schenkel gebildet werden, die um weniger als die Materialstärke nach einer Seite abgebogen sind. Dabei wird der Fußpunkt der Sperrzähne so gewählt, daß er in der Montagerichtung vor dem abgebogenen Teil liegt. Auf relativ einfache Weise können daher federnde Zahnlappen gebildet werden, die bei einem Zug in der Demontagerichtung sich in der Wandung der Formtaschen verkrallen.

In Weiterbildung der Erfindung können die Formtaschen jeweils auf der Innenseite der Wandung der beiden Schenkel des U- bzw. C-förmigen Profilstückes vorgesehen sein und als gegenüberliegende Nuten ausgebildet sein, deren Höhe und Tiefe den Sperrzähnen angepaßt ist.

In Weiterbildung der Erfindung können die Sperrzähne auch aus hochgebogenen Laschen bestehen, die durch aus dem Innenbereich ausgestanzten Öffnungen mit einer an der Lasche angrenzenden geraden Kante und durch vom Rand der Schenkel aus eingestanzten Öffnungen gebildet sind, deren der Lasche zugewandter Rand so gebogen ist, daß sich am freien Ende der Lasche spitze Zähne bilden. Diese Ausgestaltung ergibt einen besonders guten Verkralleffekt nach dem Einschieben, ist in der Herstellung aber nicht aufwendig. Die vom Rand der Schenkel aus eingestanzte Öffnungen können dabei einen Teil eines Kreisquerschnittes aufweisen, der so gelegt ist, daß die durch den Kreismittelpunkt gelegte und parallel zur Außenkante des Schenkels verlaufende Gerade durch die Mitte der Lasche verläuft. Es ergeben sich dann symmetrisch ausgebildete Eckzähne am freien Ende der Lasche.

In besonders vorteilhafter Weiterbildung der Erfindung können dann, wenn mehrere Laschen am Rand der Schenkel vorgesehen sind, diese jeweils so ausgebildet werden, daß jede in der Montagerichtung einer vorhergehenden Lasche nachfolgende Lasche am freien Ende um eine Höhe aufgebogen ist, die größer als die Höhe der vorhergehenden Lasche ist. Diese Ausgestaltung erlaubt ein einfaches Zusammenstecken, das zwar größere Kräfte erfordert je mehr Laschen in Eingriff kommen, aber die Gewähr dafür gibt, daß alle Laschen auch als Sperrzähne wirken und so einen besonders guten Halt über die gesamte Einstecklänge ergeben.

Die Erfindung ist anhand von Ausführungsbeispielen in der Zeichnung dargestellt und wird im folgenden erläutert. Es zeigen:
- Fig. 1: eine Draufsicht auf eine Eckverbindungsstelle eines erfindungsgemäß ausgestalteten Wandkanales vor dem Zusammenfügen der Teile,
- Fig. 2: die Stirnansicht einer auf Gehrung geschnittenen Stirnseite eines der beiden nach Fig. 1 zusammenzusetzenden Wandkanalprofilstücke in Richtung des Pfeiles II der Fig. 1 gesehen,
- Fig. 3: eine vergrößerte Darstellung des Details III der Fig. 2,
- Fig. 4: eine Teildarstellung einer Ansicht gemäß dem Pfeil IV der Fig. 3,
- Fig. 5: die Draufsicht auf die Eckverbindung nach Fig. 1, jedoch im fertig montierten Zustand,
- Fig. 6: eine Ansicht ähnlich Fig. 2 eines Profilstückes, das mit einem in zwei Ebenen verlaufenden Winkelstück zusammengesetzt wird,
- Fig. 7: die Darstellung des Profilstückes der Fig. 6 und der mit ihm zu verbindenden Teile in einer Draufsicht,
- Fig. 8: die Darstellung der Verbindungsstücke der Fig. 7, jedoch im zusammengesetzten Zustand,
- Fig. 9: die Draufsicht auf einen Verbindungswinkel in einer weiteren Ausführungsform, dessen beide Schenkel in einer Ebene liegen,
- Fig. 10: die Seitenansicht des Verbindungswinkels der Fig. 9,
- Fig. 11: die Stirnansicht eines Verbindungswinkels mit Sperrzähnen wie beim Verbindungswinkel der Fig. 9, jedoch mit Schenkeln, die in zwei unterschiedlichen Ebenen liegen,
- Fig. 12: die Seitenansicht des Verbindungswinkels der Fig. 11,
- Fig. 13: die vergrößerte Darstellung des Details XIII aus den Fig. 9 bzw. 11 und
- Fig. 14: die Seitenansicht des Details der Fig. 13 mit einer Spreizlasche.

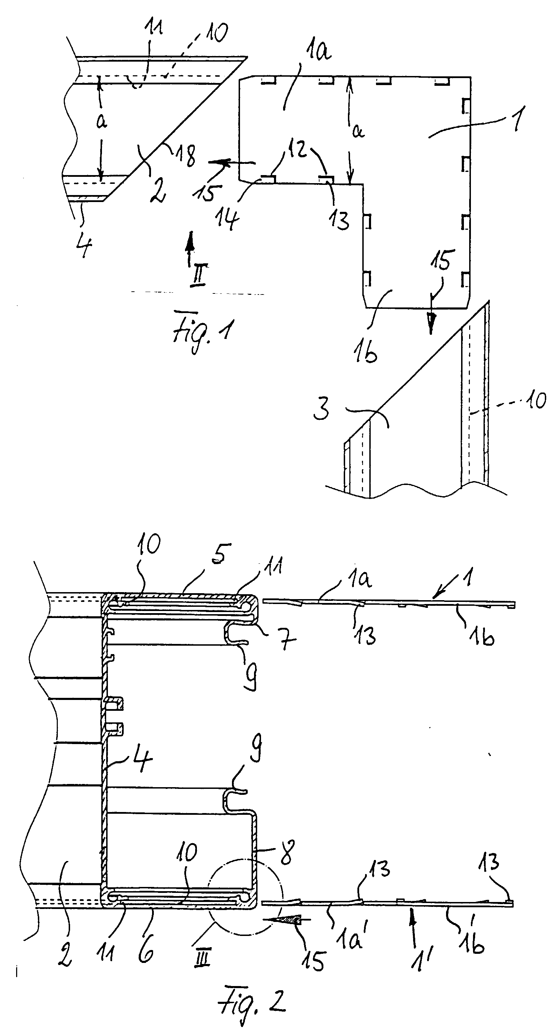

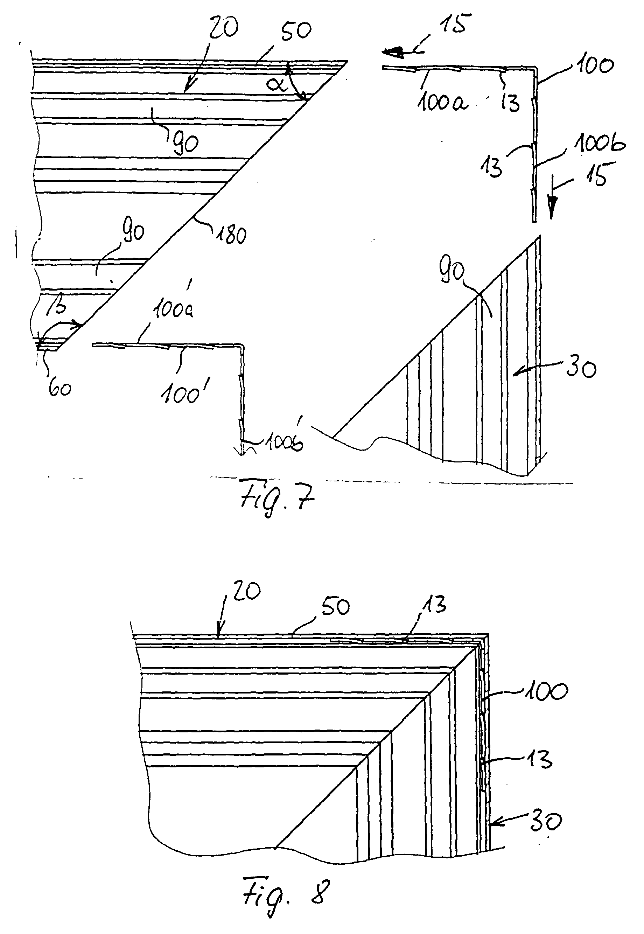

In den Figuren 1 bis 5 ist ein als Flachwinkel ausgebildeter Verbindungswinkel (1) gezeigt, dessen beide Schenkel (1a und 1b) in einer Ebene liegen, aber um 90° zueinander versetzt liegen. Die Figur 1 zeigt auch die beiden mit diesem Verbindungswinkel (1) zusammenzufügenden Profilstücke (2 und 3), die zu der in der Figur 5 gezeigten Endform mit Hilfe dieses Verbindungswinkels (1) zusammengesetzt werden können.

Die beiden Profilstücke (2 und 3) bestehen dabei, wie Figur 2 auch zeigt, aus einem etwa U- oder C-förmigen Aluminiumprofil, dessen beide von einem Boden (4) abragenden Schenkel (5 und 6) die Wände eines Wandkanales bilden, der in bekannter Weise zur Aufnahme von elektrotechnischen Geräten und Kabeln dient. Von den beiden Schenkeln (5, 6) aus ragen Abdeckteile (7 und 8) parallel zum Boden (4) in das Innere des Profiles ab, die in nutenförmige Rinnen (9) übergehen, in welche wiederum ein nicht gezeigter Abschlußdeckel für den Wandkanal eingesetzt werden kann.

Die beiden Profilstücke (2 und 3) sind unter 45° auf Gehrung geschnitten, und die sich dadurch ergebende schräge Stirnfläche des Profilstückes (2) ist aus Figur 2 erkennbar. Erkennbar ist hier auch, daß unmittelbar anschließend an die beiden Seitenwände (5 und 6) Formtaschen (10 vorgesehen sind, in welche jeweils die Schenkel (la) bzw. (1b) des Verbindungswinkels (1) eingeschoben werden können. Zu diesem zweck entspricht die Breite der Formtaschen (10) in etwa der Breite (a) der Schenkel (1a) bzw. (1b). Die Formtaschen (10) werden dabei durch zwei gegenüberliegende Nuten (11) gebildet.

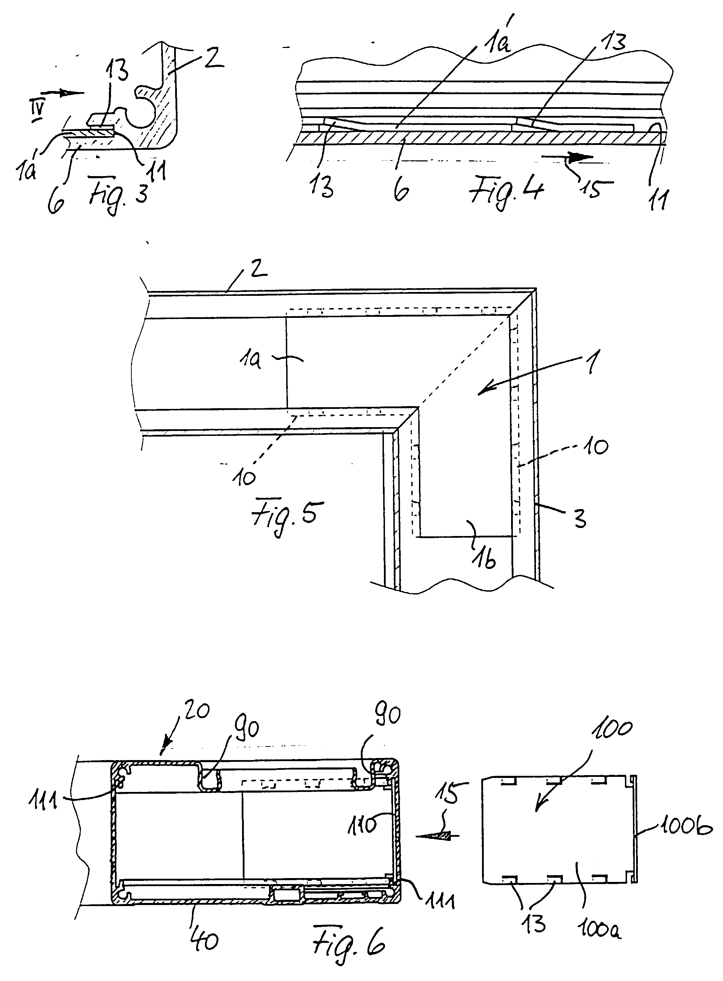

Der Verbindungswinkel (1) ist an seinen beiden Schenkeln (1a und 1b) jeweils an deren beiden Längsseiten mit L-förmigen Einschnitten (12) versehen, und die sich dadurch ergebenden Laschen (13) sind nach einer Seite um weniger als die Materialstärke des Verbindungswinkels (1) um ihren Fußpunkt (14), an dem sie noch mit dem Material des Verbindungswinkels (1) in Verbindung stehen, hochgebogen. Der Verbindungswinkel (1) besteht dabei aus einem federnden Stahl, so daß die einzelnen nach einer Seite abstehenden Laschen (13) (siehe Figur 4) an der zum Inneren des Profilstückes (2 bzw. 3) gerichteten Wand der jeweiligen Nut (11) elastisch anliegen und dafür sorgen, daß die Schenkel (1a) bzw. (1b) gegen die jeweilige Außenwand (5) bzw. (6) gedrückt werden.

Die Figur 2 zeigt, daß zwei Verbindungswinkel (1, 1') zum Zusammenfügen der Profilstücke (2, 3) vorgesehen sind. Diese beiden Verbindungswinkel (1 bzw. 1') werden daher durch die Ausbildung der Laschen (13) und der Nuten (11), deren Breite wiederum der Breite der Einschnitte (12) angepaßt ist, nach außen gedrückt. Die beiden zusammenzufügenden Profilstücke (2 und 3) werden daher durch die Verbindungswinkel (1, 1') auch exakt mit ihren Außenkonturen aneinander angepaßt, wenn sie die in der Figur 5 gezeigte Zusammenbaulage eingenommen haben. An den Außenkanten bestehen daher keine nicht passenden Teilbereiche, so daß ein formschönes und ästhetisches Aussehen der rechtwinklig aneinandergesetzten Teile entsteht.

Die Laschen (13) der Verbindungswinkel (1, 1') sind, wie die Figur 1, 2 oder auch 4 zeigt, jeweils so angeordnet, daß sie entgegengesetzt zur Einschieberichtung (15) mit ihrem freien Ende nach oben abstehen. Ihr Fußpunkt (14), an dem sie mit dem Material des Verbindungswinkels (1) noch in Verbindung stehen, liegt daher in der Montagerichtung (15) vor dem nach oben abgebogenen Teil der Lasche (13).

Diese Ausgestaltung bewirkt nun, wie ohne weiteres auch ersichtlich ist, daß sich die Schenkel (1a) bzw. (1b) leicht in die jeweils zugeordnete Formtasche (10) einschieben bzw. einpressen lassen, daß jedoch ein Herausziehen entgegen der Richtung (15) nicht mehr möglich ist. Die freien Kanten der Laschen (13) nämlich, die sich gegen die zugeordnete Innenwand der Nut (11) drücken, verkeilen sich in der Art von Widerhaken, in diesem Fall an einer Wand der Nuten (11). Die gemäß Figur 5 zusammengefügten Profilstücke (2 und 3) lassen sich daher nach ihrem Zusammenbau nicht mehr ohne weiteres lösen. Sie sind stabil und formfest über die Schenkel (1) und (1') miteinander verbunden. Bei der in den Figuren 1 bis 5 gezeigten Bauart befindet sich dabei die zwischen Rinnen (9) vorgesehene, durch einen nicht gezeigten Deckel abschließbare Kanalöffnung auf der Außenseite des durch die Verbindung der Profilstücke (2 und 3) entstandenen 90°-Winkels.

Die Figuren 6 bis 8 zeigen eine Variante eines Wandkanales, der ebenfalls über Verbindungswinkel (100, 100') in der gleichen Weise aus Profilstücken (20 und 30) zu einer Kanalecke zusammengesetzt wird, wie das vorher beschrieben worden ist. Unteschiedlich ist hier lediglich, daß die beiden Schenkel (100a bzw. 100b) nicht wie bei dem Verbindungswinkel (1 bzw. 1') in einer gemeinsamen Ebene liegen, sondern in zwei um 90° zueinander versetzten Ebenen. Die übrige Ausbildung mit seitlichen Laschen (13) ist jedoch gleich.

Unterschiedlich ist auch, daß die im Prinzip gleich wie die Profilstücke (2 und 3) aufgebauten Profilstücke (20 und 30) nicht durch eine Ebene auf Gehrung geschnitten sind, welche den Boden (4) in einer Geraden schneidet, die senkrecht zu den Längsseiten (5 und 6) verläuft. Die Profilstücke (20 und 30) sind vielmehr durch eine Ebene auf Gehrung geschnitten, durch die der Boden (40) durch eine Gerade (180) geschnitten wird, die unter 45° (Winkel α) die Seitenwand (50) und unter 135° (Winkel β) die Seitenwand (60) der Profilstücke (20 und 30) schneidet. Werden hier die Verbindungswinkel (100) bzw. (100') in die zugeordneten Formtaschen (110) eingeschoben, dann ergibt sich eine Winkelverbindung (Figur 8), bei der die zur Aufnahme des Deckels vorgesehenen Rinnen (90) in einer gemeinsamen Ebene verlaufen. Es ist natürlich auch möglich, Kanalecken zu bilden, die nicht 90° betragen. Es hängt davon ab, unter welchen Winkeln die Profilstücke auf Gehrung geschnitten werden und wie die Winkelzuordnung der jeweiligen Schenkel der Verbindungswinkel (1) bzw. (100) ist. In jedem Fall läßt sich, wie die Figuren auch ohne weiteres deutlich machen, auf diese Weise eine Winkelverbindung von Profilstükken eines Wandkanales - oder auch eines Brüstungskanales o.dgl. - vornehmen, die in einem Arbeitsgang lediglich durch mechanisches Zusammenpressen gebildet wird. Die Profilstücke werden dabei nicht nur automatisch in einem einzigen Arbeitsgang auf 90° (oder auf einen anderen Winkel) ausgerichtet und miteinander verbunden, sondern auf eine Höhe nivelliert, ohne sich gegeneinander zu verspannen. Diese Spannungsfreiheit ist die Garantie dafür, daß sich die zum Kanal gehörenden einclipsbaren nicht gezeigten Abdeckungen nicht bei der Montage verklemmen. Hinzu kommt, daß der Verbindungswinkel (1) bzw. (100) mit seinen unter hohem Flächendruck anliegenden Spitzen der als Sperrzähne wirkenden Laschen (13) auch eine stromtragfähige Verbindung zum Potentialausgleich herstellt. Die Laschen (13) dienen hierbei als Kontaktgeber.

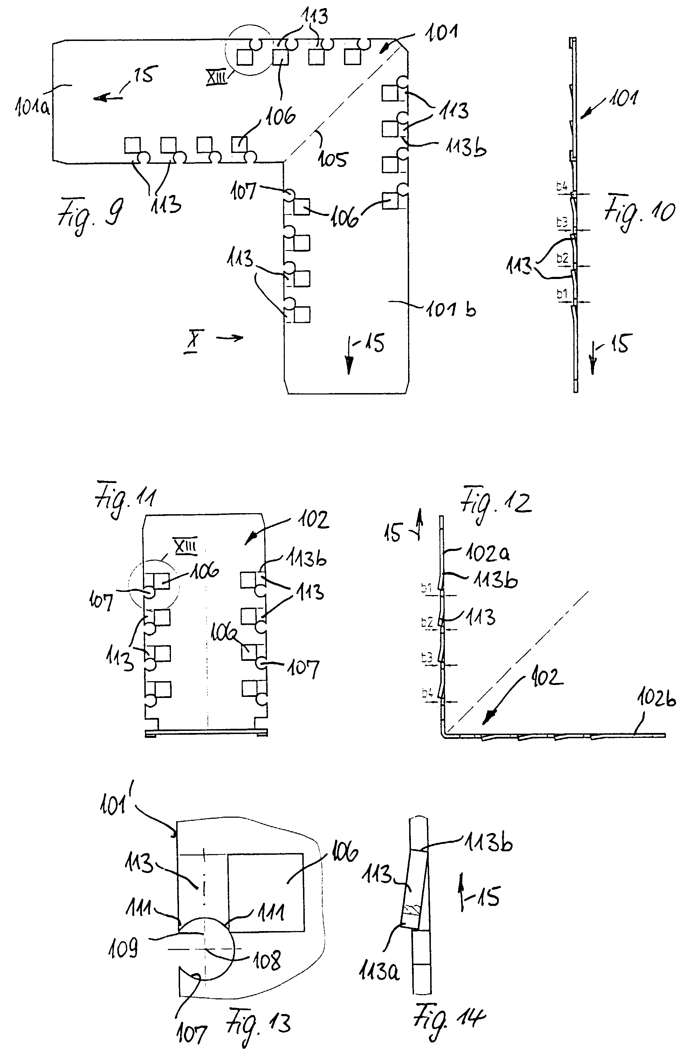

Die Fig. 9 und 10 zeigen einen Verbindungswinkel (101, dessen beide Schenkel (101a und 101b) in einer gemeinsamen Ebene liegen und gegeneinander um 90° versetzt sind. An den Rändern der beiden Schenkel sind jeweils vier Laschen (113) vorgesehen, die jeweils im gleichen Abstand zueinander angeordnet sind und auch im gleichen Abstand zu einer die innere und die äußere Ecke des Winkels verbindenden Geraden (105) stehen, die der Gehrung entspricht, unter der die nicht gezeigten Profilstücke geschnitten sind, die durch den Verbindungswinkel (101) zusammengefügt werden sollen. Die Fig. 10 läßt dabei erkennen, daß die am Schenkel (101b) und an dessen Innenseite vorgesehenen Laschen (113) jeweils um verschiedene Höhen (b1, b2, b3 und b4) hochgebogen sind, wobei die Abmessungen so gewählt sind, daß jeweils (b4) größer als (b3), (b3) größer als (b2) und (b2) größer als (b1) ist und die Differenz in diesen Größen jeweils gleich groß ist. Durch diese Ausgestaltung ist jede in der Montagerichtung (15) einer vorhergehenden Lasche (113) nachfolgende Lasche (113) am freien Ende um eine Höhe (b2 bis b4) aufgebogen, die größer als die Höhe der Aufbiegung der vorhergehenden Lasche ist. In gleicher Weise ist die Ausgestaltung auch mit den übrigen Laschen (113) vorgenommen, so daß sich dadurch bei einem Einschieben der Schenkel (101a bzw. 101b) in der jeweiligen Montagerichtung (15) nach dem vollständigen Einschieben ein gleichmäßiges Tragen aller Laschen und ein gleichmäßiges Verspreizen derselben ergibt.

Jede Lasche (113) ist dabei durch eine aus dem Innenbereich der Schenkel (101a bzw. 101b) ausgestanzte Öffnung (106) mit quadratischem Querschnitt und durch eine vom Rand der Schenkel (101a bzw. 101b) ausgehende Öffnung (107) gebildet, die durch ein Stanzwerkzeug mit Kreisquerschnitt gebildet ist und so gelegt ist, daß der Mittelpunkt (108) des Kreises auf einer Geraden (109) liegt, die die Mittellängsachse der Lasche (113) bildet und parallel zum Rand (101') des jeweiligen Schenkels verläuft. Durch diese Ausgestaltung bilden sich am freien Ende (113a) jeder Lasche (113) zwei symmetrisch zueinander angeordnete spitze Zähne (111), die dafür sorgen, daß sich die Laschen (113) in der Art von Sperrzähnen fest innerhalb der entsprechenden Einschiebetaschen verkrallen, die auch für die Ausführungsform der Fig. 9 bis 14 jenen entsprechen, die anhand der Fig. 1 bis 8 beschrieben worden sind.

Die Fig. 11 und 12 zeigen einen Verbindungswinkel (102), dessen Schenkel (102a, 102b) nicht in einer gemeinsamen Ebene liegen, sondern in Ebenen, die um 90° zueinander versetzt sind. Auch in diesem Fall sind jedoch die Laschen (113), deren Fußpunkt (113b) in der Montagerichtung (15) jeweils vor dem freien Ende (113a) liegt (siehe insbesondere Fig. 14), in der gleichen Weise wie die anhand der Fig. 9 und 10 und der Fig. 13 und 14 beschriebenen Laschen (113) ausgebildet und angeordnet. Auch hier weisen die jeweils freien Enden der Laschen (113) eine unterschiedliche Höhe (b1 bis b4) ihrer Aufbiegung auf.

## Patentansprüche

1. Elektroinstallationskanal, insbesondere Wandkanal, bestehend aus U- bzw. C-förmigen Profilstücken (2, 3, 20, 30) aus Leichtmetall, insbesondere aus Aluminium, die zur Bildung von Umlenkecken auf Gehrung geschnitten und mit benachbarten Profilstücken stirnseitig aneindergesetzt miteinander verbunden sind, wobei jedes Profilstück mit einer Formtasche ausgestaltet ist, in die ein Schenkel eines unter dem Winkel der Umlenkung abgeknickten Verbindungswinkels formschlüssig einsetzbar ist, dadurch gekennzeichnet, daß der Verbindungswinkel (1, 100, 101, 102) an seinen Schenkeln (1a, 1b, 100a, 100b, 101a, 101b, 102a, 102b) mit abstehenden Sperrzähnen (13, 113) versehen ist, die sich formschlüssig in mindestens einer Wandung der Formtasche (10, 110) verkrallen.

2. Elektroinstallationskanal nach Anspruch 1, dadurch gekennzeichnet, daß die Sperrzähne durch L-förmige Einschnitte (12) an den Längsseiten der Schenkel (1a, 1b, 100a, 100b) und durch hochgebogene Laschen (13) gebildet sind, die um weniger als die Materialstärke des Verbindungswinkels (1 bzw. 100) nach einer Seite abgebogen sind.

3. Elektroinstallationskanal nach Anspruch 2, dadurch gekennzeichnet, daß der Fußpunkt (14) der Laschen (13) in der Montagerichtung (15) vor dem abragenden Teil der Lasche (12) liegt.

4. Elektroinstallationskanal nach Anspruch 1, dadurch gekennzeichnet, daß die beiden Schenkel (1, 1b bzw. 1a', 1b') des Verbindungswinkels (1 bzw. 1') in einer gemeinsamen Ebene liegen.

5. Elektroinstallationskanal nach Anspruch 1, dadurch gekennzeichnet, daß die beiden Schenkel (100a, 100b bzw. 100a', 100b') des Verbindungswinkels (100 bzw. 100') in zwei Ebenen liegen, die jeweils um den Umlenkungswinkel gegeneinander geneigt sind.

6. Elektroinstallationskanal nach Anspruch 1, dadurch gekennzeichnet, daß die Formtaschen (10 bzw. 110) jeweils auf der Innenseite der Wandungen (5, 6 bzw. 50, 60) der beiden Schenkel des U-förmigen bzw. C-förmigen Profilstückes (2, 3 bzw. 20, 30) ausgebildet sind.

7. Elektroinstallationskanal nach Anspruch 6, dadurch gekennzeichnet, daß die Formtaschen (10 bzw. 110) durch gegenüberliegende Nuten (11 bzw. 111) gebildet werden, deren Höhe und Tiefe den als Sperrzähne wirkenden Laschen (13) angeneigt sind.

8. Elektroinstallationskanal nach Anspruch 1, dadurch gekennzeichnet, daß die Sperrzähne aus hochgebogenen Laschen (113) bestehen, die durch aus dem Innenbereich ausgestanzte Öffnungen (106) mit einer an der Lasche (113) angrenzenden geraden Kante und durch vom Rand der Schenkel aus eingestanzte Öffnungen (107) gebildet sind, deren der Lasche zugewandter Rand so gebogen ist, daß sich am freien Ende der Lasche spitze Zähne bilden.

9. Elektroinstallationskanal nach Anspruch 8, dadurch gekennzeichnet, daß die vom Rand der Schenkel aus eingestanzten Öffnungen (107) einen Teil eines Kreisquerschnittes aufweisen.

10. Elektroinstallationskanal nach Anspruch 8, dadurch gekennzeichnet, daß die aus dem Innenbereich ausgestanzten Öffnungen (106) quadratischen Querschnitt aufweisen.

11. Elektroinstallationskanal nach Anspruch 8, dadurch gekennzeichnet, daß mehrer Laschen (113) am Rand der Schenkel vorgesehen sind, von denen in der Montagerichtung einer vorhergehenden Lasche nachfolgende Lasche am freien Ende um eine Höhe (b2 bis b4) aufgebogen ist, die größer als die Höhe des Aufbiegens der vorhergehenden Lasche ist.

## Claims

1. Electrical installation duct, in particular a wall duct, consisting of U-or C-shaped profiled parts (2, 3, 20, 30) made of light metal, and in particular of aluminium, which are cut to form mitred deflection corners, and are connected with adjacent profiled parts disposed end to end with one another, such that each profiled part is in the form of a shaped pocket, into which a leg of a connection angle, which is branched under the angle of the deflection unit, can be introduced in an interlocking manner, characterised in that on its legs (1a, 1b, 100a, 100b, 101a, 101b, 102a, 102b), the connection angle (1, 100, 101, 102) is provided with projecting locking teeth (13, 113), which engage in an interlocking manner in at least one wall of the shaped pocket (10, 110).

2. Electrical installation duct according to claim 1, characterised in that the locking teeth consist of L-shaped recesses (12) on the longitudinal sides of the legs (1a, 1b, 100a, 100b), and of upwardly bent brackets (13), which are bent away to one side, by less than the thickness of the material of the connection angle (1 or 100).

3. Electrical installation duct according to claim 2, characterised in that the low end (14) of the brackets (13) are disposed in front of the projecting part of the bracket (12), in the direction of assembly (15).

4. Electrical installation duct according to claim 1, characterised in that both legs (1, 1b, or 1a', 1b') of the connection angle (1 or 1') are disposed on a common plane.

5. Electrical installation duct according to claim 1, characterised in that both legs (100a, 100b, or 100a', 100b') of the connection angle (100 or 100') are disposed on two planes, which are each inclined towards one another around the deflection angle.

6. Electrical installation duct according to claim 1, characterised in that the shaped pockets (10 or 110) are each formed on the inner side of the walls (5, 6 or 50, 60) of both legs of the U-shaped or C-shaped profiled part (2, 3 or 20, 30).

7. Electrical installation duct according to claim 6, characterised in that the shaped pockets (10 or 110) are formed by opposite grooves (11 or 111), the height and depth of which are adapted to the brackets (13) which act as locking teeth.

8. Electrical installation duct according to claim 1, characterised in that the locking teeth consist of upwardly bent brackets (113), which are formed from apertures (106) punched out of the inner area, with a straight edge which is adjacent to the bracket (113), and from apertures (107) punched out of the edge of the leg, of which the edge which faces the bracket is bent such that pointed teeth are formed on the free end of the bracket.

9. Electrical installation duct according to claim 8, characterised in that the apertures (107) which are punched out of the edge of the leg have a partially circular cross-section.

10. Electrical installation duct according to claim 8, characterised in that the apertures (106) which are punched out of the inner area have a square cross-section.

11. Electrical installation duct according to claim 8, characterised in that a plurality of brackets (113) are provided on the edge of the legs, such that in the direction of assembly, a preceding bracket is bent up at its free end around the successive bracket, to a height (b2 to b4) which is greater than the height of bending up of the preceding bracket.

## Revendications

1. Gaine technique pour installations électriques, en particulier gaine murale, constituée de pièces profilées (2, 3, 20, 30) en U ou en C, en un métal léger, en particulier en aluminium, qui sont découpées en onglet pour former des coins de renvoi, et qui sont assemblées à des pièces profilées voisines, qui sont rapportées côté frontal, chaque pièce profilée étant réalisée avec une poche, dans laquelle une branche d'une cornière d'assemblage, coudée selon un angle égal à l'angle de renvoi, peut être insérée en formant une liaison avec correspondance de forme, caractérisé en ce que la cornière d'assemblage (1, 100, 101, 102) est, au niveau de ses branches (1a, 1b, 100a, 100b, 101a, 101b, 102a, 102b), pourvue de cliquets (13, 113) en saillie, qui par une liaison avec correspondance de forme entrent en prise avec au moins une paroi de la poche (10, 110).

2. Gaine technique pour installations électriques selon la revendication 1, caractérisée en ce que les cliquets sont formés par des entailles (12) en forme de L contre les côtés longitudinaux des branches (1a, 1b, 100a, 100b), ainsi que par des languettes (13), qui sont recourbées vers un côté, sur une distance inférieure à l'épaisseur du matériau de la cornière d'assemblage (1 ou 100).

3. Gaine technique pour installations électriques selon la revendication 2, caractérisée en ce que la base (14) des languettes (13) se trouve, dans la direction de montage (15), en avant de la partie en dépassement de la languette (12).

4. Gaine technique pour installations électriques selon la revendication 1, caractérisée en ce que les deux branches (1, 1b ; 1a', 1b') de la cornière d'assemblage (1 ; 1') se trouvent dans le même plan.

5. Gaine technique pour installations électriques selon la revendication 1, caractérisée en ce que les deux branches (100a, 100b ; 100a', 100b') de la cornière d'assemblage (100 ; 100') se trouvent dans deux plans qui sont inclinés l'un vers l'autre d'un angle égal à l'angle de renvoi.

6. Gaine technique pour installations électriques selon la revendication 1, caractérisée en ce que chacune des poches (10 ; 110) est réalisée sur la face intérieure des parois (5, 6 ; 50, 60) des deux branches de la pièce profilée (2, 3 ; 20, 30) en forme de U ou de C.

7. Gaine technique pour installations électriques selon la revendication 6, caractérisée en ce que les poches (10 ; 110) sont formées par des rainures opposées (11 ; 111), dont la hauteur et la profondeur sont adaptées aux languettes (13) jouant le rôle de cliquets.

8. Gaine technique pour installations électriques selon la revendication 1, caractérisée en ce que les cliquets sont constitués de languettes relevées (113), qui sont formées par des ouvertures (106), découpées dans la zone intérieure, avec une arête rectiligne, délimitant la languette (113), et par des ouvertures (107), ajourées à partir du bord des branches, ouvertures dont le bord dirigé vers la languette est replié de façon que des dents pointues se forment au niveau de l'extrémité libre de la languette.

9. Gaine technique pour installations électriques selon la revendication 8, caractérisée en ce que les ouvertures (107) ajourées à partir du bord des branches comportent une partie d'une section circulaire.

10. Gaine technique pour installations électriques selon la revendication 8, caractérisée en ce que les ouvertures (106) découpées dans la zone intérieure ont une section transversale carrée.

11. Gaine technique pour installations électriques selon la revendication 8, caractérisée en ce que plusieurs languettes (113) sont prévues sur le bord des branches, dont la languette qui, dans la direction du montage, suit une languette précédente, est repliée vers le haut au niveau de l'extrémité libre, sur une hauteur (b2 à b4) supérieure à la hauteur de relèvement de la languette précédente.
